# EUROPÄISCHE PATENTSCHRIFT

(11) **EP 4 071 012 B1**
(45) Veröffentlichungstag und Bekanntmachung des Hinweises auf die Patenterteilung: **17.12.2025**
(21) Anmeldenummer: 22155029.6
(22) Anmeldetag: 03.02.2022
(51) Int. Cl.: B60T 8/88, B60T 13/74

(54) **BREMSSYSTEM FÜR EIN AUTONOMES FAHRZEUG**
BRAKING SYSTEM FOR AN AUTONOMOUS VEHICLE
SYSTÈME DE FREINAGE POUR UN VÉHICULE AUTONOME

(30) Priorität: 06.04.2021 DE 102021108524
(43) Veröffentlichungstag der Anmeldung: 12.10.2022
(73) Patentinhaber: Audi AG, 85045 Ingolstadt (DE)
(72) Erfinder: Brok, Tobias, 85092 Kösching (DE); Macorig, Simone, 59302 Oelde (DE)

(56) Entgegenhaltungen:
- DE-A1- 102017 204 157
- DE-A1- 102018 222 313
- US-A1- 2009 223 752
- US-A1- 2018 215 368

## Beschreibung

Die Erfindung betrifft ein Bremssystem in einem zumindest teilweise autonomen Fahrzeug nach dem Oberbegriff des Anspruches 1.

Bei einem zumindest teilweise autonomen Fahrzeug muss das Bremssystem für einen autonomen Bremsdruckaufbau sowie für eine autonome Fahrerassistenzregelung (zum Beispiel ABS- oder ESP-Funktionen) ausgelegt sein. Je nach Systemausprägung muss das Bremssystem im Fehlerfall sowohl Brems- als auch Lenkaufgaben wahrnehmen und das Fahrzeug automatisch sicher zum Stillstand bringen und im Stillstand halten. Dazu ist das Bremssystem mit einem Primär-Bremsregelsystem und einem redundanten Sekundär-Bremsregelsystem ausgestattet.

In einem gattungsgemäßen Bremssystem weist das Primär-Bremsregelsystem ein Primär-Steuergerät und je Fahrzeugrad einen elektromechanischen Primär-Aktuator zur Betätigung der Fahrzeugrad-Bremse auf. Auf der Grundlage einer in einem Pilotsystem (zum Beispiel ein Fahrerassistenzsystem) generierten Soll-Verzögerungsvorgabe und/oder einer mittels eines Bremspedals fahrzeugseitig generierten Soll-Verzögerungsvorgabe erzeugt das Primär-Steuergerät ein Primär-Stellsignal, um den jeweiligen elektromechanischen Primär-Aktuator anzusteuern.

Im Stand der Technik ist das Sekundär-Bremsregelsystem im Vergleich zum Primär-Bremsregelsystem mit einer reduzierten Funktionalität ausgestattet. Daher ist im Bremssystem-Fehlerfall der Einsatz von hochautomatisierten Fahrfunktionen lediglich bei zum Beispiel querdynamisch wenig anspruchsvollen Fahrbedingungen ermöglicht. So ist der Einsatz auf Autobahnabschnitten zwar möglich. Dabei sind jedoch Einschränkungen durch den Kurvenradius von Autobahnen, der möglichst groß sein muss, oder durch gute Fahrbahnverhältnisse gegeben. Ebenso sind die Funktionen hinsichtlich der Maximalgeschwindigkeit eingeschränkt. Die Maximalgeschwindigkeit des automatisierten Fahrens des Levels 3 oder 4 beträgt 130 km/h während des Normalbetriebs. Bei Nutzung des Sekundär-Bremsregelsystems ist dagegen die Maximalgeschwindigkeit aktuell auf 80 km/h begrenzt. Zudem ist in aktuellen Fahrzeugen die Parksperren-Funktion in der Getriebestruktur des Fahrzeugs in bauteiltechnisch einfacher Weise integriert.

Aus der DE 10 2017 211 955 A1 ist ein Bremssystem mit einem Zusatzmodul bekannt. Aus der DE 10 2011 120 614 A1 ist ein Antriebsstrang mit einem hydrodynamischen Retarder bekannt. Aus der DE 195 43 583 C1 ist eine Bremsdruck-Steuerungseinrichtung für ein Straßenfahrzeug bekannt. Aus der US 2009 223752 A1 ist ein Beispiel eines redundanten elektromechanischen Bremssystems offenbart.

Die Aufgabe der Erfindung besteht darin, ein Bremssystem in einem zumindest teilweise autonomen Fahrzeug bereitzustellen, dessen Sekundär-Bremsregelsystem im Vergleich zum Stand der Technik eine gesteigerte Funktionalität aufweist.

Die Aufgabe ist durch die Merkmale des Anspruches 1 gelöst. Bevorzugte Weiterbildungen der Erfindung sind in den Unteransprüchen offenbart.

Die Erfindung geht von einem Bremssystem in einem zumindest teilweise autonomen, zweispurigen Fahrzeug mit Vorderachse und Hinterachse aus. Das Bremssystem weist eine Fahrzeugrad-Bremse je Fahrzeugrad auf, der sowohl ein Primär-Bremsregelsystem als auch ein redundantes Sekundär-Bremsregelsystem zugeordnet ist. Das Primär-Bremsregelsystem ist aus einem Primär-Steuergerät und je Fahrzeugrad einem elektromechanischen Primär-Aktuator zur Betätigung der Fahrzeugrad-Bremse aufgebaut. Im normalen Fahrbetrieb erzeugt das Primär-Steuergerät auf der Grundlage einer Soll-Verzögerungsvorgabe, die von einem Pilotsystem generiert wird oder mittels eines Bremspedals fahrerseitig generiert wird, ein Primär-Stellsignal mit Hilfe des Primär-Stellsignals wird der jeweilige elektromechanische Primär-Aktuator angesteuert.

Zur Steigerung der Funktionalität weist gemäß dem kennzeichnenden Teil des Anspruches 1 das Sekundär-Bremsregelsystem ein vom Primär-Steuergerät unabhängiges Sekundär-Steuergerät sowie je Fahrzeugrad einen vom Primär-Aktuator unabhängigen elektromechanischen Sekundär-Aktuator auf. Das Sekundär-Steuergerät erzeugt auf der Grundlage der Soll-Verzögerungsvorgabe, die im Pilotsystem generiert wird und/oder mittels des Bremspedals fahrerseitig generiert wird, ein Sekundär-Stellsignal, mit dem der jeweilige elektromechanische Sekundär-Aktuator angesteuert wird.

Das erfindungsgemäße Bremssystem kommt also mit einer trockenen Systemtopologie gänzlich ohne Bremsflüssigkeit aus. Die Umsetzung einer Bremskraft wird über hydraulikfrei arbeitende elektromechanische Aktuatoren an der Radbremse durchgeführt. Das Eingangssignal eines fahrerseitigen Bremswunsches kann mittels einer Fußpedalsimulator-Einheit ermittelt werden. Die in der Fußpedalsimulator-Einheit integrierten, redundanten Sensoren wandeln die mechanische Bewegung des Bremspedals in ein elektrisches Signal um. Das Signal wird an das Primär-Steuergerät und an das Sekundär-Steuergerät über eine einfache Verkabelung gesendet. Die beiden Steuergeräte können über ein redundantes Bordnetz und eine doppelte Ausführung der Verkabelung mit elektrischer Energie versorgt werden. Ebenso kann jedes Steuergerät die Raddrehzahlen von jedem Rad über redundante Drehzahlsensoren sowie über eine doppelte Signalleitung erhalten. Ferner können die beiden Steuergeräte an ein redundantes Bus-System über eine jeweils doppelt ausgeführte Bus-Leitung angeschlossen sein. Zudem kann eine redundante Bus-Leitung (nachfolgend allgemein Verbindungs-Signalleitung) zur Informationsübertragung zwischen den beiden Steuergeräten vorhanden sein.

Die Ansteuerung der elektromechanischen Primär- und Sekundär-Aktuatoren an den Rädern wird mittels der Steuergeräte durchgeführt. Dabei übernimmt jeweils ein Steuergerät die Ansteuerung von insgesamt vier Aktuatoren. Jeder dieser Aktuatoren ist an einem anderen Bremssattel integriert. Die Aktuatoren sind einfache Steller, die über einen Arbeitsstrom, der über das Steuergerät geschaltet wird, angesteuert werden. Es sind keine Komponenten zur Verarbeitung von Informationen oder Arbeitsströmen in den Aktuatoren integriert.

Mit der Erfindung wird eine im Vergleich zum Stand der Technik leistungsfähigere Rückfallebene durch den Aufbau eines trockenen Bremssystems erreicht. Die Vernetzung der Systemkomponenten des Primär-Bremsregelsystems und des Sekundär-Bremsregelsystems ermöglicht selbst in einem Fehlerfall die Querstabilisierung des Fahrzeugs. Die verbesserte Dynamik ermöglicht insgesamt eine höhere Verzögerung im Fehlerfall. Der Entfall einer in einem Gangschaltgetriebe des Fahrzeugs verbauten Parksperre wird ebenfalls ermöglicht.

Erfindungsgemäß nutzt das trockene Systemkonzept eine zweifache Integration von Komponenten zur Absicherung des Sekundär-Bremsregelsystems. Die Funktionen der Systemkomponenten sind doppelt ausgelegt. Bei Ausfall einer Komponente ist eine zweite Komponente vorhanden, die die Funktionen übernimmt. Ebenso können alle Systemkomponenten während des Normalbetriebs im Einsatz sein. In einer Ausführungsvariante kann keine der Komponenten redundant sein und nur in einem Fehlerfall in Funktion sein.

Sobald der Fahrer auf den Fußpedalsimulator tritt, wird ein elektrisches Signal erzeugt und an die beiden Steuergeräte weitergeleitet, die dieses Signal verarbeiten. Der Fahrer ist dementsprechend gänzlich mechanisch vom Bremssystem entkoppelt. Die beiden Steuergeräte steuern die elektromechanischen Aktuatoren an den Radbremsen an, die die Bremskraft erzeugen. Aufgrund der Vernetzung kann mittels eines Steuergeräts eine radindividuelle Bremskraft an allen vier Rädern erzeugt werden. Ein Schiefziehen durch einen ungleichmäßigen Aufbau der Bremskraft, der aufgrund unterschiedlicher Rechenzeiten der Steuergeräte entstehen kann, kann ausgeschlossen werden. Hierbei werden stets vier Radbremsen von einem Steuergerät angesteuert, wodurch die Latenzzeiten zum Aufbau einer Bremskraft identisch sind. Die Bremskraftregelung wird über ein Vor- und Zurückfahren des Elektromotors sichergestellt.

Das erfindungsgemäße trockene Bremssystem basiert auf einer doppelten Ausführung jeder Systemkomponente. Bei Ausfall einer Komponente ist eine zweite Komponente vorhanden, die dieselben Funktionen unabhängig von einem Ausfall weiterführen kann. Der kritischste Ausfall einer Systemkomponente ist der Ausfall eines Steuergeräts. Bei einem solchen Ausfall werden die Funktionen von 50% der elektromechanischen Aktuatoren eingestellt, da diese von dem ausgefallenen Steuergerät nicht weiter angesteuert werden. Dennoch bedeutet dies, dass die Verzögerung des Fahrzeugs nicht zwingend um 50% abnimmt. Der limitierende Faktor einer maximalen Verzögerung des Fahrzeugs ist der Reibbeiwert zwischen Reifen und Fahrbahn. Das Primärbremssystem ist so ausgelegt, dass ein Blockieren der Räder beim Abbremsen stets erreicht wird. Die Spannkraft der Bremssättel ist so groß, dass theoretisch eine höhere Bremskraft erreicht werden könnte als tatsächlich auf die Fahrbahn übertragen werden kann.

Die Spannkraft eines einzelnen elektromechanischen Aktuators muss so ausgelegt werden, dass der elektromechanische Aktuator eigenständig das Blockieren der Räder ermöglichen kann.

Das erfindungsgemäße Sekundär-Bremsregelsystem kann weiterhin die radindividuelle Bremskraft einstellen. Die Funktionen einer Längs- und Querstabilisierung des Fahrzeugs bleiben als auch bei einem Fehler im Primär-Bremsregelsystem abgesichert. Im Vergleich zum Primär-Bremsregelsystem weist das Sekundär-Bremsregelsystem im Ganzen keine Einschränkungen auf und ermöglicht alle Funktionen, die das Primär-Bremsregelsystem ebenso erreichen kann.

Die Halte-Funktion wird mittels eines Arbeitsstroms, der auf mindestens einem elektromechanischen Aktuator pro Rad wirkt, erreicht. Dadurch wird eine Bremskraft aufgebaut und gehalten. Zudem ermöglicht die Systemtopologie eine Absicherung der Halte-Funktion in einem Fehlerfall, da jeweils ein zweiter elektromechanischer Aktuator pro Rad angesteuert werden kann.

Hinsichtlich der Funktion des Parkens sind unterschiedliche Variationen möglich. Durch den Einsatz einer Sperrfunktion in den elektromechanischen Aktuatoren wird das Blockieren des Aktuators grundsätzlich sichergestellt und eine Kraft zum Parken kann aufrechterhalten werden. Um die Anforderung zu erreichen, dass bei einem Fehler im Primär-Bremsregelsystem die Parkkraft auf mindestens zwei Räder übertragen wird, müssen mindestens vier der acht elektromechanischen Aktuatoren über eine Sperrfunktion verfügen. Hierbei muss jeweils ein Steuergerät mindestens zwei Aktuatoren für die Sperrfunktion ansteuern können. Dabei ist die Auslegung, an welchen Rädern diese Sperrfunktion integriert wird, irrelevant. Der optimale Aufbau einer Integration der Sperrfunktion ist jedoch, an jeder Radbremse des Fahrzeuges eine Sperrfunktion zu integrieren. Dabei werden die Sperrfunktionen von gegenüberliegenden Radbremsen jeweils von einem Steuergerät angesteuert. Hierdurch wird der Stand der Technik bei Fahrzeugen mit einer angetriebenen Achse übertroffen und das Fahrzeug kann im Normalbetrieb mit vier, statt zwei Rädern parken. Der Stand der Technik bei Fahrzeugen mit Allradantrieb und Parksperre wird nicht erreicht, da die Parksperre bei diesen Fahrzeugen ebenso auf vier Räder wirkt. Zusätzlich wird bei diesem Stand der Technik ein Kraftfluss mittels Form- und Kraftschluss erreicht.

Bei dem kritischen Fehlerfall, d.h. ein Ausfall eines Steuergeräts, ist weiterhin die Möglichkeit gegeben, die Parkkraft über zwei Räder übertragen zu können. Die Parkkraft wirkt dabei auf jeweils ein Rad der Vorder- und Hinterachse. Zusätzlich wirkt die Parkkraft stets auf ein rechtes und ein linkes Rad. Der Einfluss der Fahrbahnbedingungen kann hierdurch reduziert werden.

Nachfolgend sind wesentliche Erfindungsaspekte nochmals im Einzelnen dargestellt: So können bevorzugt das Primär-Steuergerät und das Sekundär-Steuergerät baugleich sowie funktionsgleich ausgeführt sein. In gleicher Weise können auch die Primär-Aktuatoren sowie die Sekundär-Aktuatoren baugleich sowie funktionsgleich realisiert sein.

Bevorzugt kann das Bremspedal Bestandteil einer Fußpedalsimulator-Einheit mit zumindest einem Pedalsensor sein. Die Fußpedalsimulator-Einheit kann die mechanische Pedal-Bewegung in ein elektrisches Fußpedal-Signal umwandeln, das die fahrerseitig generierte Soll-Verzögerungsvorgabe ist.

Zur weiteren Erhöhung der Systemsicherheit ist es bevorzugt, wenn ein Primär-Bordnetz und ein redundantes Sekundär-Bordnetz bereitgestellt sind. Diese können voneinander unabhängig jeweils das Primär-Steuergerät und das Sekundär-Steuergerät mit elektrischer Energie versorgen.

In einer technischen Umsetzung kann jedem Fahrzeugrad ein Primär-Drehzahlsensor und ein Sekundär-Drehzahlsensor zugeordnet sein. Der Primär-Drehzahlsensor ist in Signalverbindung mit dem Primär-Steuergerät. In gleicher Weise ist der Sekundär-Drehzahlsensor in Signalverbindung mit dem Sekundär-Steuergerät.

Bevorzugt ist es, wenn das Pilotsystem über eine Primär-Signalleitung mit dem Primär-Steuergerät in Signalverbindung ist. Unabhängig davon kann das Pilotsystem über eine weitere Sekundär-Signalleitung mit dem Sekundär-Steuergerät in Signalverbindung sein.

In einer ersten Ausführungsvariante kann im normalen Fahrbetrieb alleine das Primär-Bremsregelsystem im Einsatz sein, während das Sekundär-Bremsregelsystem deaktiviert ist. Bevorzugt kann das Primär-Steuergerät über eine Verbindungs-Signalleitung mit dem Sekundär-Steuergerät verbunden sein. Über die Verbindungs-Signalleitung können Zustands-Informationen zwischen den beiden Steuergeräten ausgetauscht werden. Sofern im Primär-Steuergerät ein Fehlerfall im Primär-Bremsregelsystem diagnostiziert ist, wird ein Fehlersignal generiert, mit dem über die Verbindungs-Signalleitung das Sekundär-Steuergerät aktivierbar ist. In diesem Fall übernimmt das Sekundär-Bremsregelsystem, anstelle des Primär-Bremsregelsystems, die Umsetzung der Soll-Verzögerungsvorgabe.

In einer alternativen Betriebsweise kann bereits im normalen Fahrbetrieb sowohl das Primär-Bremsregelsystem als auch das Sekundär-Bremsregelsystem im Einsatz sein. In diesem Fall arbeiten daher bereits im normalen Fahrbetrieb die beiden Bremsregelsysteme im Parallelbetrieb.

In einer Weiterbildung der Erfindung kann zumindest einer der elektromechanischen Primär-Aktuatoren sowie zumindest einer der elektromechanischen Sekundär-Aktuatoren jeweils eine Sperrfunktion aufweisen, mittels der in einer Parksituation der Aktor das zugeordnete Fahrzeugrad durch Bremsbetätigung blockiert. Bevorzugt sind sämtliche Aktuatoren mit einer solchen Sperrfunktion ausgestattet.

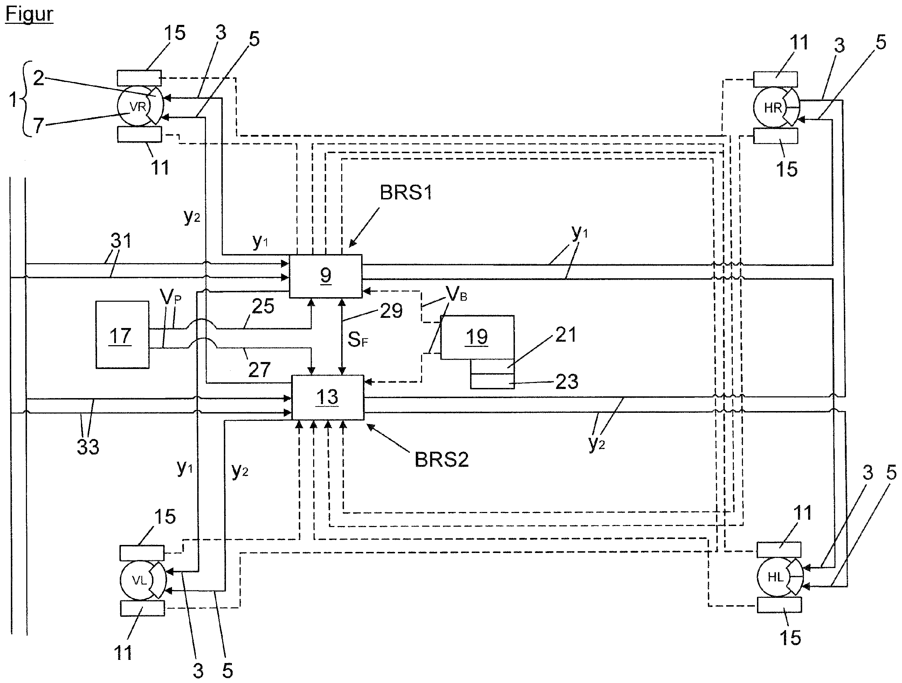

Nachfolgend ist ein Ausführungsbeispiel der Erfindung anhand der beigefügten Figur beschrieben.

In der Figur ist ein schematisches Blockschaltdiagramm des Bremssystems eines zweispurigen autonomen Fahrzeugs mit einer Vorderachse und einer Hinterachse gezeigt. Demnach ist jedem der beiden Vorderräder VL, VR und jedem der beiden Hinterräder HR, HL jeweils eine Fahrzeugrad-Bremse 1 zugeordnet. Die Fahrzeugrad-Bremse 1 weist einen Bremssattel 2 auf, der über einen elektromechanischen Primär-Aktuator 3 und über einen elektromechanischen Sekundär-Aktuator 5 mit Druck beaufschlagbar ist, wodurch der Bremssattel 2 mit seinen nicht dargestellten Bremsbelägen in Druckanlage mit der Bremsscheibe 7 der Fahrzeugrad-Bremse 1 kommt. Der elektromechanische Primär-Aktuator 3 ist Bestandteil eines Primär-Bremsregelsystems BRS1, während der elektromechanische Sekundär-Aktuator 5 Bestandteil eines Sekundär-Bremsregelsystems BRS2 ist. Sämtliche Aktuatoren 3, 5 arbeiten hydraulikfrei.

Das Primär-Bremsregelsystem BRS1 ist in der Figur aus einem Primär-Steuergerät 9 und den insgesamt vier elektromechanischen Primär-Aktuatoren 3 aufgebaut, die jeweils einer Fahrzeugrad-Bremse 1 zugeordnet sind. Zudem ist das Primär-Steuergerät 9 je Fahrzeugrad VL, VR, HR, HL in Signalverbindung mit einem Primär-Drehzahlsensor 11.

Das redundante Sekundär-Bremsregelsystem BRS2 weist baugleiche Komponenten wie das Primär-Bremsregelsystem BRS1 auf. Demnach ist das Sekundär-Bremsregelsystem BSR2 aus einem Sekundär-Steuergerät 13 und je Fahrzeugrad aus einem elektromechanischen Sekundär-Aktuator 5 aufgebaut. Das Sekundär-Steuergerät 13 ist zudem mit Sekundär-Drehzahlsensoren 15 in Signalverbindung, die je Fahrzeugrad bereitgestellt sind.

Im normalen Fahrbetrieb werden auf der Grundlage einer, in einem Pilotsystem 17 (zum Beispiel ein Fahrerassistenzsystem mit ABS- und EPS-Funktionen) generierten Soll-Verzögerungsvorgabe V_{P} und/oder einer mittels eines Bremspedals 19 fahrerseitig generierten Soll-Verzögerungsvorgabe V_{B} im Primär-Steuergerät 9 Primär-Stellsignale y₁ erzeugt. Mit Hilfe der Primär-Stellsignale y₁ werden die jeweiligen elektromechanischen Primär-Aktuatoren 3 angesteuert, um diverse Brems- oder Lenkaufgaben wahrzunehmen.

Das Primär-Steuergerät 9 und das Sekundär-Steuergerät 13 werden jeweils von einem Primär-Bordnetz 31 und einem redundanten Sekundär-Bordnetz 33 voneinander unabhängig mit elektrischer Energie versorgt.

In der Figur ist das Bremspedal 19 eine Fußpedalsimulator-Einheit mit einem Drucksensor 21 und einem Wegsensor 23. Die Fußpedalsimulator-Einheit wandelt die von den beiden Sensoren 21, 23 erfasste Pedal-Bewegung in ein elektrisches Fußpedal-Signal um, das der fahrerseitig generierten Soll-Verzögerungsvorgabe V_{B} entspricht.

In der Figur ist zudem das Pilotsystem 17 mit einer Primär-Signalleitung 25 mit dem Primär-Steuergerät 9 in Signalverbindung, während das Pilotsystem 17 über eine davon unabhängige Sekundär-Signalleitung 27 mit dem Sekundär-Steuergerät 13 in Signalverbindung ist. Darüber hinaus sind die beiden Steuergeräte 9, 13 mittels einer Verbindungs-Signalleitung 29 miteinander verbunden. Über die Verbindungs-Signalleitung 29 können zwischen den beiden Steuergeräten 9, 13 Zustands-Informationen ausgetauscht werden.

In einem normalen Fahrbetrieb ist in der dargestellten Ausführungsvariante lediglich das Primär-Bremsregelsystem BRS1 im Einsatz, während das redundante Sekundär-Bremsregelsystem BRS2 deaktiviert ist. Sofern ein Diagnosemodul im Primär-Steuergerät 9 einen Fehlerfall im Primär-Bremsregelsystem BRS1 detektiert, wird ein Fehlersignal S_{F} generiert, das von dem Primär-Steuergerät 9 über die Verbindungs-Signalleitung 29 in das Sekundär-Steuergerät 13 ausgelesen wird. Daraufhin übernimmt das Sekundär-Bremsregelsystem BRS2 die Umsetzung der Soll-Verzögerungsvorgaben V_{P}, V_{B}.

Alternativ dazu kann bereits im normalen Fahrbetrieb sowohl das Primär-Bremsregelsystem BRS1 als auch das Sekundär-Bremsregelsystem BRS2 im Einsatz sein, sodass beide Bremsregelsystem im Parallelbetrieb arbeiten.

Darüber hinaus weisen die elektromechanischen Primär- und Sekundäraktuatoren 9, 13 jeweils eine Sperrfunktion auf, mittels der in einer Parksituation der jeweilige Aktuator 3, 5 das zugeordnete Fahrzeugrad durch Bremsbetätigung blockiert.

### BEZUGSZEICHENLISTE:

- 1: Fahrzeugrad-Bremse
- 2: Bremssattel
- 3, 5: Primär- und Sekundär-Aktuatoren
- 7: Bremsscheibe
- 9: Primär-Steuergerät
- 11: Primär-Drehzahlsensor
- 13: Sekundär-Steuergerät
- 15: Sekundär-Drehzahlsensoren
- 17: Pilotsystem
- 19: Bremspedal
- 21: Drucksensor
- 23: Wegsensor
- 25: Primär-Signalleitung
- 27: Sekundär-Signalleitung
- 29: Verbindungs-Signalleitung
- 31: Primär-Bordnetz
- 33: Sekundär-Bordnetz
- S_{F}: Fehlersignal
- V_{P}, V_{B}: Soll-Verzögerungsvorgaben
- y₁, y₂: Stellsignale
- BRS1: Primär-Bremsregelsystem
- BRS2: Sekundär-Bremsregelsystem

## Patentansprüche

1. Bremssystem in einem zumindest teilweise autonomen Fahrzeug, mit einer Fahrzeugrad-Bremse (1) je Fahrzeugrad (VR, VL, HR, HL), der sowohl ein Primär-Bremsregelsystem (BRS1) als auch redundantes Sekundär-Bremsregelsystem (BRS2) zugeordnet ist, wobei das Primär-Bremsregelsystem (BRS1) ein Primär-Steuergerät (9) und je Fahrzeugrad (VR, VL, HR, HL) einen elektromechanischen Primär-Aktuator (3) zur Betätigung der Fahrzeugrad-Bremse (1) aufweist, und wobei auf der Grundlage einer in einem Pilotsystem (17) generierten Soll-Verzögerungsvorgabe (V_{P}) und/oder einer mittels eines Bremspedals (19) fahrerseitig generierten Soll-Verzögerungsvorgabe (V_{B}) das Primär-Steuergerät (9) Primär-Stellsignale (y₁) zur Ansteuerung des jeweiligen elektromechanischen Primär-Aktuators (3) erzeugt,
**dadurch gekennzeichnet,**
**dass** das Sekundär-Bremsregelsystem (BRS2) ein vom Primär-Steuergerät (9) unabhängiges Sekundär-Steuergerät (13) sowie je Fahrzeugrad (VR, VL, HR, HL) einen vom Primär-Aktuator (3) unabhängigen elektromechanischen Sekundär-Aktuator (5) aufweist, und dass das Sekundär-Steuergerät (13) auf der Grundlage der im Pilotsystem (17) generierten Soll-Verzögerungsvorgabe (V_{P}, V_{B}) Sekundär-Stellsignale (y₂) zur Ansteuerung des jeweiligen elektromechanischen Sekundär-Aktuators (5) erzeugt.

2. Bremssystem nach Anspruch 1, **dadurch gekennzeichnet, dass** das Bremspedal (19) Bestandteil einer Fußpedalsimulator-Einheit mit zumindest einem Pedalsensor (21, 23) ist, und dass die Fußpedalsimulator-Einheit die mechanische Pedal-Bewegung in ein elektrisches Fußpedal-Signal umwandelt, das die fahrerseitig generierte Soll-Verzögerungsvorgabe (V_{B}) ist.

3. Bremssystem nach Anspruch 1 oder 2, **dadurch gekennzeichnet, dass** ein Primär-Bordnetz (31) und ein redundantes Sekundär-Bordnetz (33) bereitgestellt sind, die voneinander unabhängig jeweils das Primär-Steuergerät (9) und das Sekundär-Steuergerät (13) mit elektrischer Energie versorgen.

4. Bremssystem nach einem der vorhergehenden Ansprüche, **dadurch gekennzeichnet, dass** jedem Fahrzeugrad (HR, HL, VR, VL) ein Primär-Drehzahlsensor (11) und ein Sekundär-Drehzahlsensor (15) zugeordnet ist, die jeweils mit dem Primär-Steuergerät (9) und mit dem Sekundär-Steuergerät (13) in Signalverbindung sind.

5. Bremssystem nach einem der vorhergehenden Ansprüche, **dadurch gekennzeichnet, dass** das Pilotsystem (17) über eine Primär-Signalleitung (25) mit dem Primär-Steuergerät (9) in Signalverbindung ist, und dass das Pilotsystem (17) über eine davon unabhängige Sekundär-Signalleitung (27) mit dem Sekundär-Steuergerät (13) in Signalverbindung ist.

6. Bremssystem nach einem der vorhergehenden Ansprüche, **dadurch gekennzeichnet, dass** zwischen dem Primär-Steuergerät (9) und dem Sekundär-Steuergerät (13) eine Verbindungs-Signalleitung (29) verlegt ist, über die Zustands-Informationen zwischen den Steuergeräten (9, 13) austauschbar sind, und dass insbesondere in einem Fehlerfall im Primär-Bremsregelsystem (BRS1) das Primär-Steuergerät (9) ein Fehlersignal (S_{F}) generiert, mit dem über die Verbindungs-Signalleitung (29) das Sekundär-Steuergerät (13) aktivierbar ist, so dass anstelle des Primär-Bremsregelsystems (BRS1) das Sekundär-Bremsregelsystem (BRS2) die Umsetzung der Soll-Verzögerungsvorgabe (V_{B}, V_{P}) übernimmt.

7. Bremssystem nach einem der Ansprüche 1 bis 5, **dadurch gekennzeichnet, dass** im normalen Fahrbetrieb sowohl das Primär-Bremsregelsystem (BRS1) als auch das Sekundär-Bremsregelsystem (BRS2) im Einsatz sind, so dass beide Bremsregelsysteme (BRS1, BRS2) im Parallelbetrieb arbeiten.

8. Bremssystem nach einem der vorhergehenden Ansprüche, **dadurch gekennzeichnet, dass** zumindest einer der elektromechanischen Aktuatoren (3, 5) eine Sperrfunktion aufweist, mittels der in einer Parksituation der Aktuator (3, 5) durch Bremsbetätigung das zugeordnete Fahrzeugrad (VL, VR, HR, HL) blockiert.

9. Bremssystem nach einem der vorhergehenden Ansprüche, **dadurch gekennzeichnet, dass** das Primär-Steuergerät (9) und das Sekundär-Steuergerät (13) baugleich sind, und/oder dass der Primär-Aktuator (3) und der Sekundär-Aktuator (5) baugleich sind.

## Claims

1. Braking system in an at least partially autonomous vehicle, with a vehicle wheel brake (1) for each vehicle wheel (VR, VL, HR, HL), to which both a primary brake control system (BRS1) and a redundant secondary brake control system (BRS2) are assigned, wherein the primary brake control system (BRS1) has a primary control unit (9) and, for each vehicle wheel (VR, VL, HR, HL), an electromechanical primary actuator (3) for actuating the vehicle wheel brake (1), and wherein, on the basis of a setpoint deceleration specification (V_{P}) generated in a pilot system (17) and/or a setpoint deceleration specification (V_{B}) generated by the driver by means of a brake pedal (19), the primary control unit (9) generates primary control signals (y₁) for controlling the respective electromechanical primary actuator (3),
**characterized in that**
the secondary brake control system (BRS2) has a secondary control unit (13) that is independent of the primary control unit (9) and, for each vehicle wheel (VR, VL, HR, HL) an electromechanical secondary actuator (5) that is independent of the primary actuator (3), and **in that** the secondary control unit (13) generates secondary control signals (y₂) for controlling the respective electromechanical secondary actuator (5) on the basis of the setpoint deceleration specification (V_{P}, V_{B}) generated in the pilot system (17).

2. Braking system according to claim 1, **characterized in that** the brake pedal (19) is part of a foot pedal simulator unit with at least one pedal sensor (21, 23), and **in that** the foot pedal simulator unit converts the mechanical pedal movement into an electrical foot pedal signal, which is the setpoint deceleration specification (V_{B}) generated on the driver's side.

3. Braking system according to claim 1 or 2, **characterized in that** a primary vehicle electrical system (31) and a redundant secondary vehicle electrical system (33) are provided, which independently of one another supply the primary control unit (9) and the secondary control unit (13) with electrical energy respectively.

4. Braking system according to any one of the preceding claims, **characterized in that** each vehicle wheel (HR, HL, VR, VL) is assigned a primary speed sensor (11) and a secondary speed sensor (15), which are each in signal communication with the primary control unit (9) and the secondary control unit (13).

5. Braking system according to any one of the preceding claims, **characterized in that** the pilot system (17) is in signal communication with the primary control unit (9) via a primary signal line (25), and **in that** the pilot system (17) is in signal communication with the secondary control unit (13) via a secondary signal line (27) independent thereof.

6. Braking system according to any one of the preceding claims, **characterized in that** a connecting signal line (29) is laid between the primary control unit (9) and the secondary control unit (13), via which status information can be exchanged between the control units (9, 13), and **in that**, in particular, in the event of a fault in the primary brake control system (BRS1), the primary control unit (9) generates an error signal (S_{F}) with which the secondary control unit (13) can be activated via the connecting signal line (29), so that the secondary brake control system (BRS2) takes over implementation of the setpoint deceleration specification (V_{B}, V_{P}) instead of the primary brake control system (BRS1).

7. Braking system according to one of claims 1 to 5, **characterized in that**, in normal driving operation, both the primary brake control system (BRS1) and the secondary brake control system (BRS2) are in use, so that both brake control systems (BRS1, BRS2) operate in parallel.

8. Braking system according to any one of the preceding claims, **characterized in that** at least one of the electromechanical actuators (3, 5) has a locking function by means of which, in a parking situation, the actuator (3, 5) locks the associated vehicle wheel (VL, VR, HR, HL) by actuating the brake.

9. Braking system according to any one of the preceding claims, **characterized in that** the primary control unit (9) and the secondary control unit (13) are identical in design, and/or **in that** the primary actuator (3) and the secondary actuator (5) are identical in design.

## Revendications

1. Système de freinage dans un véhicule au moins partiellement autonome, avec un frein de roue de véhicule (1) par roue de véhicule (VR, VL, HR, HL) qui est associé non seulement à un système de régulation de freinage primaire (BRS1) mais aussi à un système de régulation de freinage secondaire (BRS2), dans lequel le système de régulation de freinage primaire (BRS1) présente un dispositif de commande primaire (9) et par roue de véhicule (VR, VL, HR, HL) un actionneur primaire (3) électromécanique pour l'actionnement du frein de roue de véhicule (1), et dans lequel sur la base d'une spécification de ralentissement de consigne (V_{P}) générée dans un système pilote (17) et/ou d'une spécification de ralentissement de consigne (V_{B}) générée au moyen d'une pédale de frein (19) côté conducteur, le dispositif de commande primaire (9) génère des signaux de réglage primaires (y₁) pour la commande de l'actionneur primaire (3) électromécanique respectif,
**caractérisé en ce que**
le système de régulation de freinage secondaire (BRS2) présente un dispositif de commande secondaire (13) indépendant du dispositif de commande primaire (9) ainsi que par roue de véhicule (VR, VL, HR, HL) un actionneur secondaire (5) électromécanique indépendant de l'actionneur primaire (3), et **en ce que** le dispositif de commande secondaire (13) génère, sur la base de la spécification de ralentissement de consigne (V_{P}, V_{B}) générée dans le système pilote (17), des signaux de réglage secondaires (y₂) pour la commande de l'actionneur secondaire (5) électromécanique respectif.

2. Système de freinage selon la revendication 1, **caractérisé en ce que** la pédale de frein (19) fait partie d'une unité de simulateur de pédale avec au moins un capteur de pédale (21, 23), et **en ce que** l'unité de simulateur de pédale convertit le mouvement de pédale mécanique en un signal de pédale électrique qui est la spécification de ralentissement de consigne (V_{B}) générée côté conducteur.

3. Système de freinage selon la revendication 1 ou 2, **caractérisé en ce qu'**un réseau de bord primaire (31) et un réseau de bord secondaire redondant (33) sont prévus, lesquels alimentent indépendamment l'un de l'autre respectivement le dispositif de commande primaire (9) et le dispositif de commande secondaire (13) en énergie électrique.

4. Système de freinage selon l'une quelconque des revendications précédentes, **caractérisé en ce que** chaque roue de véhicule (HR, HL, VR, VL) se voit associée à un capteur de vitesse de rotation primaire (11) et à un capteur de vitesse de rotation secondaire (15) qui sont respectivement en liaison de signal avec le dispositif de commande primaire (9) et avec le dispositif de commande secondaire (13).

5. Système de freinage selon l'une quelconque des revendications précédentes, **caractérisé en ce que** le système pilote (17) est en liaison de signal avec le dispositif de commande primaire (9) par l'intermédiaire d'une ligne de signal primaire (25), et **en ce que** le système pilote (17) est en liaison de signal avec le dispositif de commande secondaire (13) par l'intermédiaire d'une ligne de signal secondaire (27) qui en est indépendante.

6. Système de freinage selon l'une quelconque des revendications précédentes, **caractérisé en ce qu'**une ligne de signal de connexion (29) est posée entre le dispositif de commande primaire (9) et le dispositif de commande secondaire (13), par l'intermédiaire de laquelle des informations d'état peuvent être échangées entre les dispositifs de commande (9, 13), et **en ce que**, en particulier en cas d'erreur dans le système de régulation de freinage primaire (BRS1), le dispositif de commande primaire (9) génère un signal d'erreur (S_{F}), avec lequel le dispositif de commande secondaire (13) peut être activé par l'intermédiaire de la ligne de signal de connexion (29) de sorte que le système de régulation de freinage secondaire (BRS2) prenne en charge la mise en œuvre de la spécification de ralentissement de consigne (V_{B}, V_{P}) à la place du système de régulation de freinage primaire (BRS1).

7. Système de freinage selon l'une quelconque des revendications 1 à 5, **caractérisé en ce qu'**en mode de conduite normal, aussi bien le système de régulation de freinage primaire (BRS1) que le système de régulation de freinage secondaire (BRS2) sont utilisés de sorte que les deux systèmes de régulation de freinage (BRS1, BRS2) fonctionnent en parallèle.

8. Système de freinage selon l'une quelconque des revendications précédentes, **caractérisé en ce qu'**au moins un des actionneurs électromécaniques (3, 5) présente une fonction de verrouillage, au moyen de laquelle dans une situation de stationnement, l'actionneur (3, 5) bloque la roue de véhicule associée (VL, VR, HR, HL) par actionnement de frein.

9. Système de freinage selon l'une quelconque des revendications précédentes, **caractérisé en ce que** le dispositif de commande primaire (9) et le dispositif de commande secondaire (13) sont de construction identique et/ou **en ce que** l'actionneur primaire (3) et l'actionneur secondaire (5) sont de construction identique.
